# EUROPEAN PATENT SPECIFICATION

(11) **EP 2 676 104 B1**
(45) Date of publication and mention of the grant of the patent: **08.06.2016**
(21) Application number: 12711221.7
(22) Date of filing: 15.02.2012
(51) Int. Cl.: G01C 21/36

(54) **MAP INFORMATION DISPLAY APPARATUS**
VORRICHTUNG ZUR ANZEIGE VON KARTENINFORMATIONEN
APPAREIL D'AFFICHAGE D'INFORMATIONS CARTOGRAPHIQUES

(30) Priority: 17.02.2011 JP 2011032221
(43) Date of publication of application: 25.12.2013
(73) Proprietor: TOYOTA JIDOSHA KABUSHIKI KAISHA, Toyota-shi, Aichi-ken, 471-8571 (JP)
(72) Inventor: TAKEUCHI, Shojiro, Toyota-shi, Aichi-ken, 471-8571 (JP); IHARA, Naoki, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/IB2012/000265
(87) International publication number: WO 2012/110882

(56) References cited:
- EP-A1- 0 944 032
- EP-A1- 1 298 414
- EP-A2- 2 023 088
- US-A1- 2003 023 374

## Description

The invention relates to a map information display apparatus that displays a specific facility on map information.

A technique described in Japanese Patent Application Publication No. 10-089989 (JP-A-10-089989) is available as a map information display apparatus in which map information of a navigation device or the like is displayed on a display. JP-A-10-089989 discloses a technique for displaying an icon of a destination facility retrieved in a facility search or the like so as to be superposed on map information, wherein a parking lot mark of an allied car park allied with the destination facility and a parking lot mark of a parking lot not allied with the facility are displayed in a discriminable manner.

In the map information display apparatus according to the related art, however, the parking lot marks are invariably displayed, and therefore the parking lot marks may make the map information difficult to see. For example, when a large number of parking lots exist on the periphery of the destination and parking lot marks indicating these parking lots are displayed so as to be superposed on the map information, the map information on the periphery of the destination is hidden by the parking lot marks, making it impossible to determine a route to the destination. Further, the destination itself is hidden by the parking lot marks, making it impossible to confirm the existence and the position of the destination. Moreover, a large number of parking lots such as coin-operated parking lots exist within a town, further aggravating these problems.

EP 1 287 414 A1 describes a method of displaying a landmark in a navigation apparatus in which map information, a present position of a motor vehicle, a destination, a driving route, a position of a facility, a landmark of the facility or the like are displayed on a screen of a monitor display. The method comprises storing an additional mark made up of a figure, a mark and a symbol representing at least one of an installed state and a supplementary condition of the facility in a storage device as a data base. The corresponding additional mark is called up if the facility has at least one of the installed state and the supplementary condition.

EP 2 023 088 A1 discloses a method which involves calculating and displaying card view at a display device, where the card view represents a section of a geographical area. The emphasized points or points of interest are selected. A combination symbol has a display area in which a temporarily varied POI-symbol is displayed.

The invention provides a map information display apparatus, as defined in claim 1 or any one of the dependent claims, that displays map information clearly.

An aspect of the invention relates to a map information display apparatus which includes: a display device that displays map information including a map and facility information; and a navigation device which, when a specific facility and a peripheral facility existing within a predetermined distance of the specific facility (in the vicinity of the specific facility) are included in the map information displayed by the display device, displays specific facility information indicating the specific facility and peripheral facility information indicating the peripheral facility integrally on the map.

In the map information display apparatus according to this aspect of the invention, the specific facility information and the peripheral facility information are displayed integrally, and therefore a surface area of the map and the specific facility information hidden by the peripheral facility information can be reduced while indicating that the peripheral facility exists within the predetermined distance of the specific facility. As a result, the map information can be viewed more easily.

In the map information display apparatus described above, the specific facility information and the peripheral facility information are displayed integrally, e.g. in a position of the specific facility. By displaying the specific facility information and the peripheral facility information integrally on the map in the position of the specific facility in this manner, the surface area of the map information on the periphery of the specific facility that is hidden by the peripheral facility information can be reduced while specifying the position of the specific facility. As a result, a route to the specific facility can be determined appropriately.

In the map information display apparatus described above, the specific facility information and the peripheral facility information integrally displayed may be displayed together with information indicating a relationship between the specific facility and the peripheral facility. By displaying the specific facility information and the peripheral facility information integrally together with the information indicating the relationship between the specific facility and the peripheral facility in this manner, the nature of the relationship between the peripheral facility existing within the set distance of the specific facility and the specific facility can be determined easily.

In the map information display apparatus described above, the specific facility information is a specific facility mark, the peripheral facility information is a peripheral
facility mark, and the single integrated mark depicts the specific facility mark and the peripheral facility mark integrally. The single integrated mark is displayed on the map without
displaying the specific facility mark and the peripheral facility mark, and when the integrated mark is selected, the integrated mark is deleted, the specific facility mark is displayed on the map in a position of the specific facility, and the peripheral facility mark is displayed on the map in a position of the peripheral facility.

By displaying the single integrated mark instead of displaying the specific facility mark and the peripheral facility mark in this manner, the surface area of the map and the specific facility mark that is hidden by the peripheral facility mark can be reduced while indicating that the peripheral facility exists within the set distance of the specific facility. As a result, the map information can be viewed more easily. Further, when the integrated mark is selected, the selected integrated mark is deleted, whereupon the specific facility mark and the peripheral facility mark are displayed respectively in the positions of the specific facility and the peripheral facility. Hence, the positions of the specific facility and the peripheral facility can be specified.

In the map information display apparatus described above, the integrated mark may be displayed on the map in the position of the specific facility. By displaying the integrated mark in the position of the specific facility in this manner, the surface area of the map information on the periphery of the specific facility that is hidden by the peripheral facility mark can be reduced while specifying the position of the specific facility. As a result, the route to the specific facility can be determined appropriately.

In the map information display apparatus described above, the integrated mark may indicate a relationship between the specific facility and the peripheral facility. By indicating the relationship between the specific facility and the peripheral facility using the integrated mark in this manner, the nature of the relationship between the peripheral facility existing within the set distance of the specific facility and the specific facility can be determined easily.

In the map information display apparatus described above, the peripheral facility mark combined as part of the integrated mark may be varied on the basis of a relationship between the specific facility and the peripheral facility. By varying the peripheral facility mark in this manner, the nature of the relationship between the peripheral facility existing within the set distance of the specific facility and the specific facility can be determined easily.

In the map information display apparatus described above, after the integrated mark is deleted, the specific facility mark displayed on the map in the position of the specific facility may be displayed in an emphasized manner.

In the map information display apparatus described above, when the peripheral facility exists in plurality, a priority order may be set with regard to relationships between the specific facility and the respective peripheral facilities, and after the integrated mark is deleted, the peripheral facility mark indicating a peripheral facility and having a priority order equal to or higher than a predetermined level may be displayed separately from a peripheral facility mark indicating a peripheral facility having a priority order which is lower than the predetermined level.

In the map information display apparatus described above, after the integrated mark is deleted, the peripheral facility mark indicating the peripheral facility having a priority order equal to or higher than the predetermined level may be displayed separately from the peripheral facility mark indicating a peripheral facility having a priority order which is lower than the predetermined level by displaying a connecting line linking the peripheral facility mark indicating the peripheral facility having a priority order equal to or higher than the predetermined level to the specific facility mark indicating the specific facility.

According to the invention, the map information can be displayed clearly.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing the constitution of a map information display apparatus according to an embodiment;
FIG. 2 is a view showing a restaurant icon;
FIG. 3 is a view showing parking lot icons, wherein FIG. 3A shows a reserved parking lot icon, FIG. 3B shows an allied parking lot icon, and FIG. 3C shows a coin-operated parking lot icon;
FIG. 4 is a view showing an integrated icon;
FIG. 5 is a flowchart showing a display processing operation;
FIG. 6 is a view showing an example of a conventional display screen according to a first example;
FIG. 7 is a view showing an example of a display screen displayed during a normal operation according to the first example;
FIG. 8 is a view showing an example of a display screen displayed when the integrated icon is selected according to the first example;
FIG. 9 is a view showing an example of a conventional display screen according to a second example;
FIG. 10 is a view showing an example of a display screen displayed during a normal operation according to the second example;
FIG. 11 is a view showing an example of a conventional display screen according to a third example;
FIG. 12 is a view showing an example of a display screen displayed during a normal operation according to the third example; and
FIG. 13 is a view showing an example of a display screen displayed when the integrated icon is selected according to the third example.

### DETAILED DESCRIPTION OF EMBODIMENTS

A preferred embodiment of a map information display apparatus according to the invention will be described in detail below with reference to the drawings. This embodiment is applied to a navigation device formed by installing the map information display apparatus according to the invention in a vehicle. Note that in all of the drawings, identical reference numerals have been allocated to identical or corresponding parts.

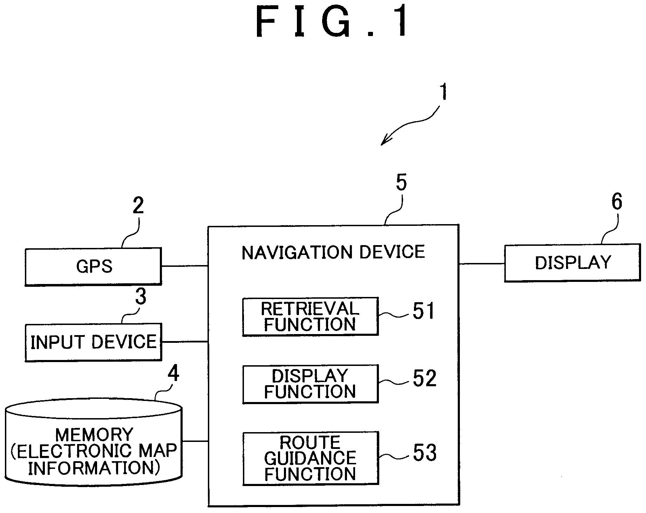

FIG. 1 is a block diagram showing the constitution of the map information display apparatus according to this embodiment. As shown in FIG. 1, a map information display apparatus 1 according to this embodiment includes a global positioning system (GPS) 2 that measures a position of a host vehicle, an input device 3 that receives operation input from a user, a memory 4 storing map information that include the map and the facility information (for example, specific facility information or peripheral facility information), a navigation device 5, and a touch panel display (display device) 6 that displays output information from the navigation device 5. The input device 3 is constituted by a remote controller belonging to the navigation device 5, the touch panel of the display 6, or the like, and inputs various information into the navigation device 5 when operated by the user.

The navigation device 5 performs retrieval, display, and so on of a specific facility serving as a destination on the basis of the input information from the input device 3, and provides route guidance from a current position to the destination (point of interest (POI)). For this purpose, the navigation device 5 includes a retrieval function 51, a display function 52, and a route guidance function 53. Note that the retrieval function 51, display function 52, and route guidance function 53 may be realized by executing predetermined software.

The retrieval function 51 functions to retrieve the destination and peripheral facilities existing within a predetermined distance of the destination on the basis of the input information from the input device 3. The peripheral facilities are facilities somehow related to a retrieval subject facility, for example, and are determined according to the type and so on of the retrieval subject facility. For example, when a restaurant is retrieved, the user needs to park his/her vehicle in order to eat at the restaurant, and therefore the peripheral facility of the destination restaurant is a parking lot. Further, a distance range in which the peripheral facilities are retrieved may be set appropriately by the user at 100 m or the like, for example. Note, however, that if the peripheral facility is too far removed from the destination, the retrieved peripheral facility is not displayed on the display 6, and therefore the retrieved peripheral facilities preferably exist in the vicinity of the destination.

The retrieval function 51 is capable of retrieving a destination and peripheral facilities existing within the predetermined distance of the destination using a conventional retrieval system. A database associating retrieval subject facilities such as restaurants with positions, types, evaluation rankings, and so on is constructed in advance such that when facility retrieval conditions are set from the input device 3, a facility matching the conditions is extracted from the database as the destination. Types of the peripheral facilities are specified by associating peripheral facility types with possible retrieval subject facilities in advance in the database.

The display function 52 functions to display information of a destination, peripheral facilities existing within a set distance of the destination and the like on the display 6 so as to be superposed on map information (the map which is included in the map information) of the periphery of the destination retrieved by the retrieval function 51 to enable the user to determine the destination. For this purpose, the display function 52 includes destination icons (destination marks) indicating destinations, peripheral facility icons (peripheral facility marks) indicating peripheral facilities, and integrated icons (integrated marks) depicting a destination icon and a peripheral facility icon integrally.

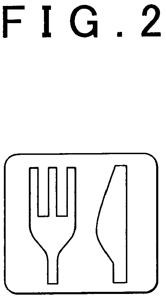

FIG. 2 is a view showing a restaurant icon serving as an example of the destination icon. As shown in FIG. 2, the restaurant icon serving as an example of the destination icon is a design combining marks of a knife and a fork. Thus, the facility type of the destination can be identified easily as a restaurant.

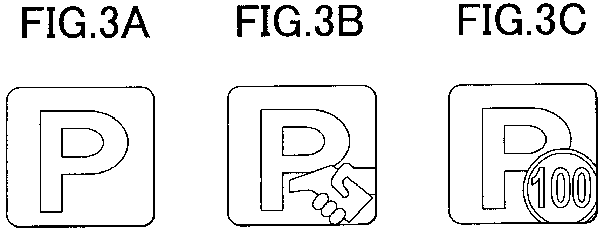

FIG. 3A, FIG. 3B and FIG. 3C is a view showing parking lot icons serving as examples of the peripheral facility icons, wherein FIG. 3A shows a reserved parking lot icon, FIG. 3B shows an allied parking lot icon, and FIG. 3C shows a coin-operated parking lot icon. As shown in FIG. 3A, FIG. 3B and FIG. 3C, the parking lot icons serving as examples of the peripheral facility icons are designs having a "P" mark as a basis.

Incidentally, parking lots are related to restaurants in various ways, such as (1) a reserved parking lot of the restaurant, (2) a parking lot that is allied with the restaurant, and (3) a typical coin-operated parking lot. A parking fee discount rate typically varies according to this relationship, and therefore the user wishing to park his/her vehicle in a parking lot in order to use the restaurant presumably wants to know not only the positions of the parking lots existing within the set distance of the restaurant, but also the relationships between the restaurant and the parking lots. Therefore, the reserved parking lot icon indicating a reserved parking lot of the destination restaurant is formed from the "P" mark alone, as shown in FIG. 3A, the allied parking lot icon indicating a parking lot allied with the destination restaurant is formed from a combination of the "P" mark and a "handshake" mark, as shown in FIG. 3B, and the coin-operated parking lot icon indicating a typical coin-operated parking lot not allied with the destination restaurant is formed from a combination of the "P" mark and a "100 yen coin" mark, as shown in FIG. 3C.

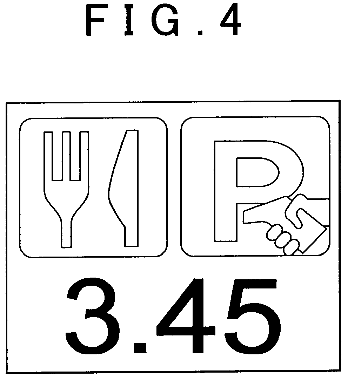

FIG. 4 is a view showing an example of an integrated icon integrating the restaurant icon and the parking lot icon. As shown in FIG. 4, the integrated icon is a design combining one of the restaurant icons shown in FIG. 2, one of the parking lot icons shown in FIG. 3A, FIG. 3B and FIG. 3C, and the evaluation ranking of the restaurant.

Incidentally, to reduce a parking lot usage fee, the restaurant user presumably wishes to park his/her vehicle in (1) a reserved parking lot of the restaurant, (2) a parking lot allied with the restaurant, and (3) a typical coin-operated parking lot, in that priority order. Therefore, (1) a reserved parking lot of the restaurant, (2) a parking lot allied with the restaurant, and (3) a typical coin-operated parking lot are selected in that priority order as the parking lot icon constituting the integrated icon. More specifically, when a reserved parking lot of the restaurant exists within the set distance of the destination restaurant, the reserved parking lot icon (FIG. 3A) is used as the parking lot icon of the integrated icon, when the restaurant does not have a reserved parking lot but a parking lot allied with the restaurant exists, the allied parking lot icon (FIG. 3B) is used as the parking lot icon of the integrated icon, and when the restaurant has neither a reserved parking lot nor an allied parking lot, the coin-operated parking lot icon (FIG. 3C) is used as the parking lot icon of the integrated icon.

Hence, the display function 52 generates an integrated icon integrating the destination icon of the destination retrieved by the retrieval function 51 and peripheral facility icons indicating one or a plurality of peripheral facilities retrieved by the retrieval function 51. Note that even when the retrieval function 51 retrieves a plurality of parking lots, only one parking lot icon is displayed on the integrated icon. The display function 52 then displays the integrated icon on the display 6 so as to be superposed onto map information (the map which is included in the map information) of the periphery of the destination, obtained from the memory 4. At this time, the display function 52 superposes the integrated icon onto the map information so that the integrated icon is disposed in the position of the destination.

Further, when the integrated icon is selected through the input device 3, the display function 52 deletes the selected integrated icon, and displays a destination icon indicating the destination corresponding to the selected integrated icon and peripheral facility icons indicating one or a plurality of peripheral facilities existing within the set distance of the destination corresponding to the selected integrated icon on the display 6 so as to be superposed onto the map information. At this time, the display function 52 superposes the destination icon and the peripheral facility icon on the map information so that the destination icon is disposed in the position of the destination and the peripheral facility icon is disposed in the position of the peripheral facility. The display function 52 then emphasizes the display of the destination icon. Emphasized display can be achieved by displaying a target mark surrounding the destination icon or causing the destination icon to flash, for example. Further, when a peripheral facility that is allied with the destination exists within the set distance of the destination, a connecting line linking the peripheral facility icon indicating the peripheral facility to the destination icon is displayed. Note that when no peripheral facilities exist within the set distance of the destination, the destination icon may be displayed alone from the start, without displaying the integrated icon.

When the destination icon displayed in an emphasized manner is then selected again through the input device 3, the display function 52 determines the destination corresponding to the selected destination icon as an official destination.

The route guidance function 53 functions to guide the host vehicle along a travel route from the current position thereof to the destination. More specifically, the route guidance function 53 detects the current position of the host vehicle through position measurement using the GPS 2, and calculates a travel route from the current position of the host vehicle to the destination determined by the display function 52. The route guidance function 53 then displays the calculated travel route on the display 6 by superposing the travel route onto the map information stored in the memory 4.

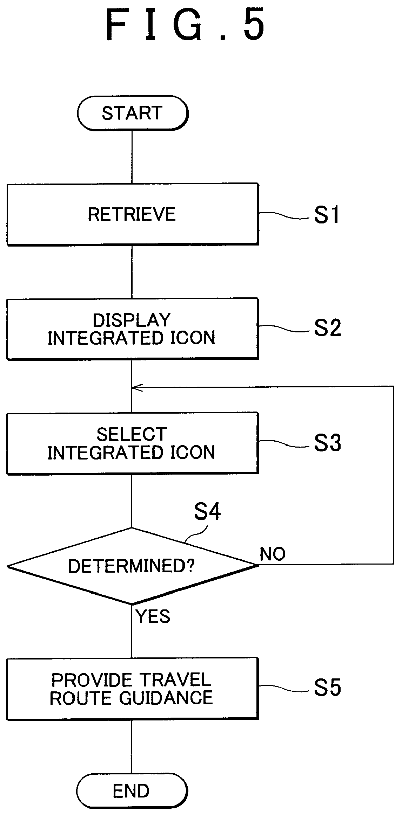

Next, referring to FIG. 5, a processing operation performed by the map information display apparatus 1 will be described, using a case in which a restaurant is set as the destination as an example. FIG. 5 is a flowchart showing a display processing operation. Note that this processing operation is started when the user operates the input device 3, and executed by the navigation device 5 of the map information display apparatus 1.

As shown in FIG. 5, first, in Step S1, the navigation device 5 performs retrieval processing using the retrieval function 51. More specifically, in the retrieval processing of Step S1, a restaurant matching the retrieval conditions set using the input device 3 is retrieved as a destination candidate and parking lots existing within a predetermined distance of the destination restaurant are retrieved as peripheral facilities.

Next, in Step S2, the navigation device 5 performs integrated icon display processing using the display function 52. More specifically, in the integrated icon display processing of Step S2, first, the map information of the periphery of the destination is obtained from the memory 4, and an integrated icon integrating the restaurant icon indicating the destination restaurant and a parking lot icon indicating a parking lot serving as a peripheral facility is generated. At this time, the integrated icon is constituted by the restaurant icon, the parking lot icon, and the evaluation ranking, and the priority order of the icons employed as the parking lot icon is (1) the reserved parking lot icon, (2) the allied parking lot icon, and (3) the coin-operated parking lot icon. Note that when a plurality of destinations is retrieved in Step S1, an integrated icon is generated for each retrieved destination. The generated integrated icon is then displayed on the display 6 by being superposed onto the obtained map information (the map which is included in the map information) in the position of the destination.

Next, in Step S3, the navigation device 5 performs integrated icon selection processing using the display function 52. More specifically, in the integrated icon selection processing of Step S3, first, when the integrated icon displayed on the display 6 is selected through the input device 3, the selected integrated icon is deleted. The restaurant icon indicating the destination restaurant is then displayed on the display 6 by being superposed onto the map information in the position of the restaurant, and the parking lot icons indicating the parking lots serving as the peripheral facilities are displayed on the display 6 by being superposed onto the map information in the positions of the respective parking lots. At this time, the icon of the destination restaurant is displayed in an emphasized manner. Further, when the parking lot serving as the peripheral facility is a reserved parking lot or an allied parking lot of the destination restaurant, a connecting line linking the restaurant icon to the parking lot icon is displayed.

Next, in Step S4, the navigation device 5 determines whether or not destination selection has been determined using the display function 52. More specifically, in the determination of Step S4, when the processing is completed before the restaurant icon displayed in an emphasized manner in Step S3 is selected again through the input device 3, or when a predetermined time elapses, the navigation device 5 returns to Step S3 without determining a destination. When, on the other hand, the restaurant icon displayed in an emphasized manner in Step S3 is selected again through the input device 3, the navigation device 5 determines the restaurant corresponding to the reselected restaurant icon as the destination, and then advances to Step S5.

Next, in Step S5, the navigation device 5 performs travel route guidance processing using the route guidance function 53. More specifically, in the travel route guidance processing of Step S5, first, the current position of the host vehicle is detected through position measurement using the GPS 2, and then a travel route from the current position of the host vehicle to the destination determined in Step S4 is calculated. The travel route is then displayed on the display 6 so as to be superposed onto the map information stored in the memory 4, and when the vehicle reaches the destination, the processing operation executed by the navigation device 5 is terminated.

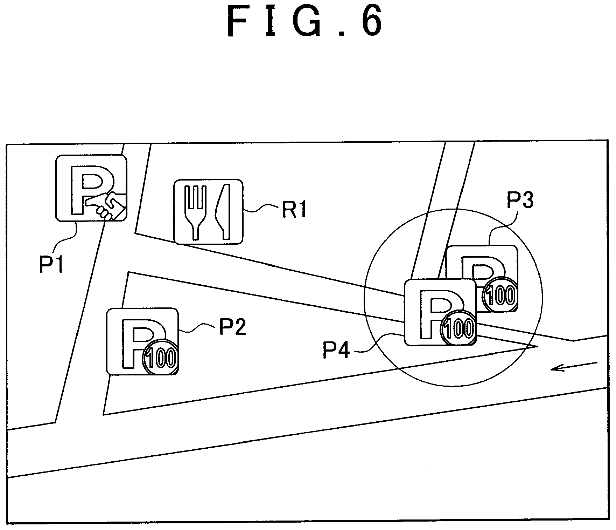

Next, referring to FIGS. 6 to 13, display examples displayed on the display 6 according to first to third examples will be described.

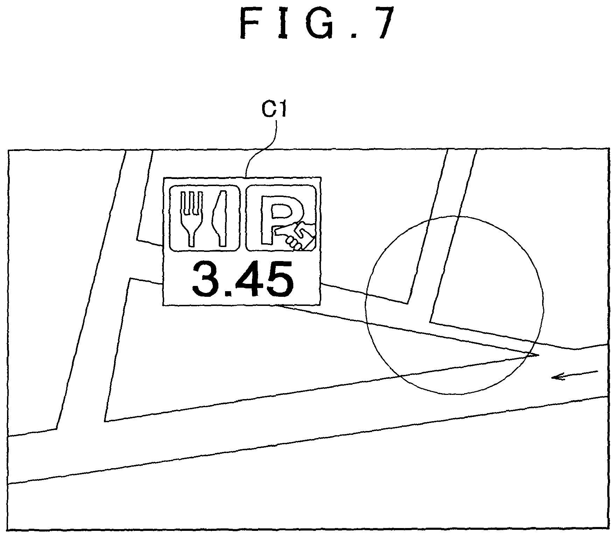

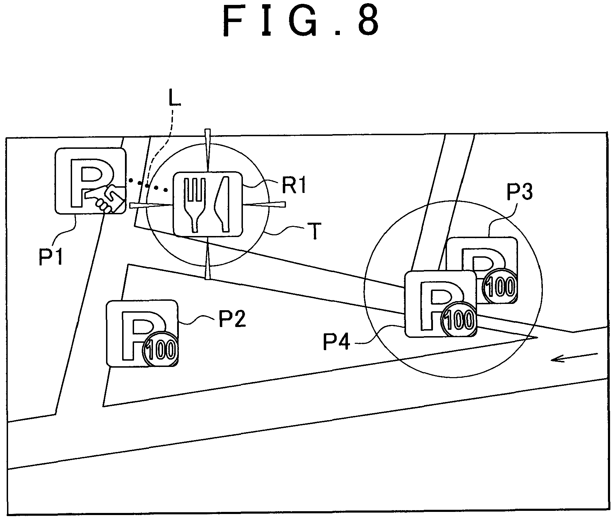

First, referring to FIGS. 6 to 8, a display example according to a first example will be described. FIG. 6 is a view showing an example of a conventional display screen according to the first example. FIG. 7 is a view showing an example of a display screen displayed during a normal operation according to the first example. FIG. 8 is a view showing an example of a display screen displayed when the integrated icon is selected according to the first example. Note that arrows shown in FIGS. 6 to 8 indicate vehicle travel directions.

The first example is an example in which a single restaurant is retrieved by the retrieval function 51 and one allied parking lot and three typical coin-operated parking lots exist within the set distance of the restaurant.

As shown in FIG. 6, conventionally, when a single restaurant is retrieved as the destination, a restaurant icon R1 is displayed on the map information displayed on the display in the position of the destination restaurant, and parking lot icons P1 to P4 are displayed in the positions of the respective parking lots. As a result, a road leading to the destination restaurant is hidden by the parking lot icons P3, P4 (see circular frame in FIG. 6) so that the user cannot determine the route to the restaurant and the parking lots by looking at the display screen of the display.

In this embodiment, on the other hand, as shown in FIG. 7, when a single restaurant is retrieved as the destination by the retrieval function 51, an integrated icon C1 combining the restaurant icon, the allied parking lot icon, and the evaluation ranking is displayed on the map information (the map which is included in the map information) displayed on the display 6 in the position of the destination restaurant. More specifically, the restaurant icon R1 and the plurality of parking lot icons P1 to P4 are gathered together into the single integrated icon C1, and therefore the integrated icon C1 is displayed alone on the map information displayed on the display 6 in the position of the destination restaurant, while the parking lot icons are not displayed in the positions of the parking lots (see circular frame in FIG. 7). As a result, the road leading to the destination restaurant is not hidden by the parking lot icons, and therefore the user can easily confirm the route to the restaurant or the parking lot. Further, the parking lot icon is displayed within the integrated icon C1, and therefore the user can be notified of the existence of a parking lot within the set distance of the destination restaurant. Moreover, the parking lot icon is the allied parking lot icon, and therefore the user can be notified of the existence of an allied parking lot offering a discounted parking fee within the set distance of the destination restaurant.

As shown in FIG. 8, when the integrated icon C1 is selected through the input device 3, the integrated icon C1 is deleted, whereupon the restaurant icon R1 is displayed in the position of the restaurant corresponding to the integrated icon C1 and the allied parking lot icon P1 and the coin-operated parking lot icons P2 to P4 are displayed in the positions of the respective parking lots existing within the set distance of the restaurant. Further, the restaurant icon R1 is displayed in an emphasized manner using a target mark T, and a connecting line L is displayed between the restaurant icon R1 and the allied parking lot icon P1. Hence, the parking lot icons P1 to P4 are displayed after the route to the destination restaurant is confirmed, and therefore the user can determine the route to the restaurant or the parking lot even when the road is hidden by the parking lot icons P3, P4 (see circular frame in FIG. 8). Furthermore, the restaurant icon R1 is displayed in an emphasized manner using the target mark T, and therefore the user can grasp the position of the selected restaurant easily. Moreover, the connecting line L is displayed between the restaurant icon R1 and the parking lot icon P1, and therefore the alliance between the destination restaurant and the parking lot can be indicated more clearly, allowing the user to select a reasonably priced parking lot easily. According to an aspect of the invention, when the parking lot (serving as an example of a peripheral facility) exists in plurality, a priority order is set with regard to the relationships between the restaurant (serving as an example of a specific facility) and the respective parking lots, and after the integrated icon (serving as an example of an integrated mark) C1 is deleted, a parking lot icon (serving as an example of a peripheral facility mark) indicating a parking lot that the priority order is equal to or higher than the predetermined level is displayed separately from a parking lot icon indicating a parking lot that the priority order is lower than the predetermined level.

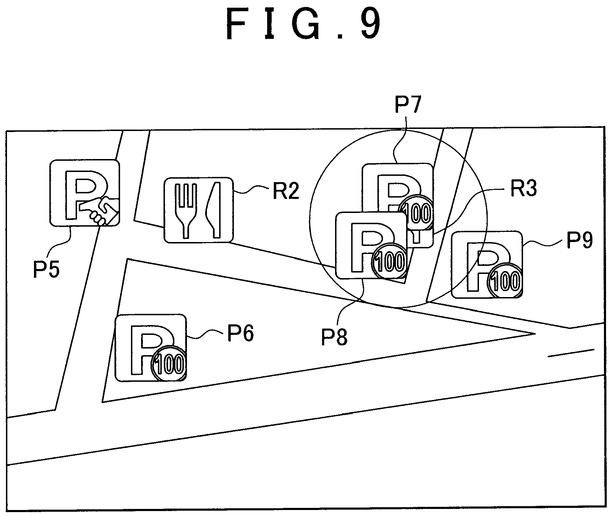

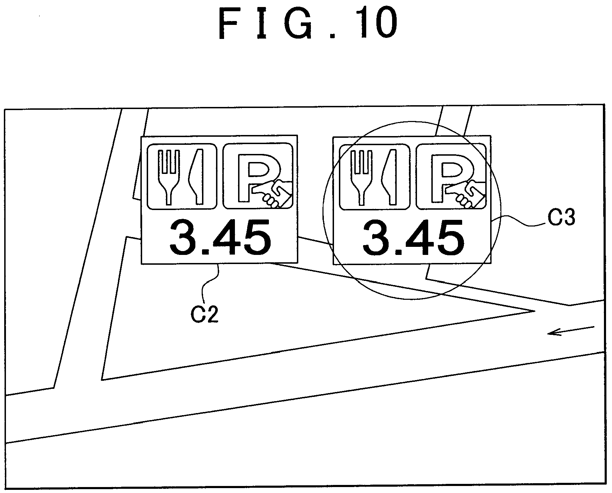

Next, referring to FIGS. 9 and 10, a display example according to a second example will be described. FIG. 9 is a view showing an example of a conventional display screen according to the second example, and FIG. 10 is a view showing an example of a display screen displayed during a normal operation according to the second example. Note that arrows shown in FIGS. 9 and 10 indicate vehicle travel directions.

The second example is an example in which two restaurants are retrieved by the retrieval function 51, a total of five parking lots exist within set distances of the restaurants, and two of the five parking lots are close to one of the restaurants.

As shown in FIG. 9, conventionally, when two restaurants are retrieved as destinations, restaurant icons R2, R3 are displayed on the map information displayed on the display in the positions of the respective destination restaurants, and parking lot icons P5 to P9 are displayed in the positions of the respective parking lots. As a result, all or a part of the restaurant icon R3 is hidden by the parking lot icons P7, P8 (see circular frame in FIG. 9) so that the user cannot find the restaurant icon R3 by looking at the display screen of the display.

In this embodiment, on the other hand, as shown in FIG. 10, when two restaurants are retrieved as destinations by the retrieval function 51, integrated icons C2, C3 respectively combining a restaurant icon, a parking lot icon, and an evaluation ranking are displayed alone on the map information (the map which is included in the map information) displayed on the display 6 in the positions of the respective destination restaurants (see circular frame in FIG. 10). As a result, the user can find both the integrated icon C2 and the integrated icon C3 corresponding respectively to the restaurant icon R2 and the restaurant icon R3 easily by looking at the display screen of the display 6.

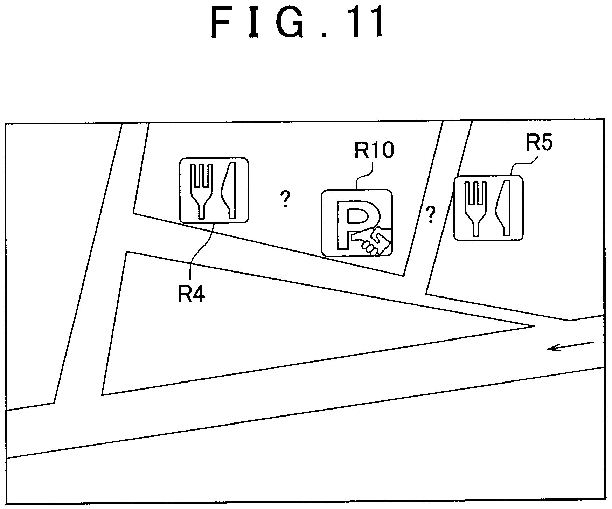

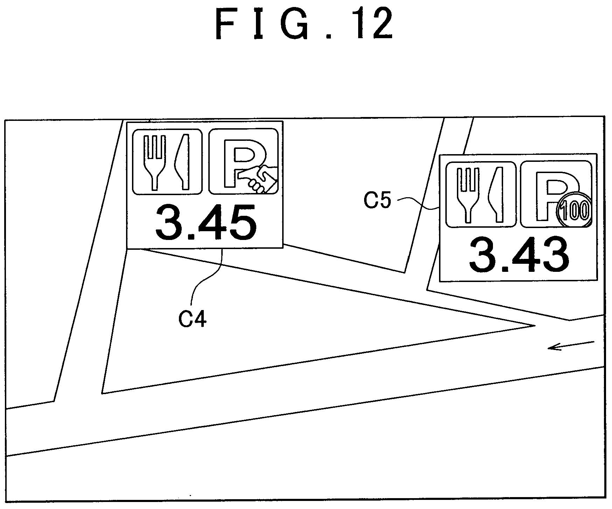

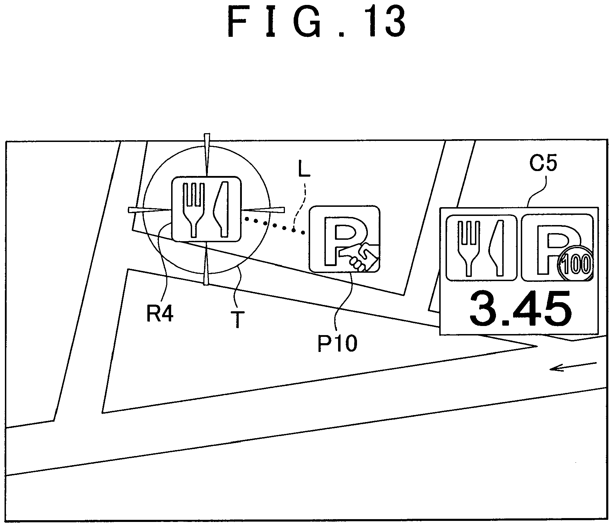

Next, referring to FIGS. 11 to 13, a display example according to a third example will be described. FIG. 11 is a view showing an example of a conventional display screen according to the third example. FIG. 12 is a view showing an example of a display screen displayed during a normal operation according to the third example. FIG. 13 is a view showing an example of a display screen displayed when the integrated icon is selected according to the third example. Note that arrows shown in FIGS. 11 to 13 indicate vehicle travel directions.

The third example is an example in which two restaurants are retrieved by the retrieval function 51 and a parking lot that is allied with one of the restaurants but not allied with the other restaurants exists between the two restaurants.

As shown in FIG. 11, conventionally, when two restaurants are retrieved as destinations, restaurant icons R4, R5 are displayed on the map information (the map which is included in the map information) displayed on the display in the positions of the respective destination restaurants, and a parking lot icon P10 is displayed in the position of the parking lot. At this time, although the parking lot has different relationships with the respective restaurants, only one of the allied parking lot icon (see FIG. 3B) and the coin-operated parking lot icon (see FIG. 3C) can be displayed as the parking lot icon. It is therefore impossible to determine the restaurant that is in an alliance with the parking lot and the restaurant that is not from the displayed parking lot icon.

Hence, in this embodiment, as shown in FIG. 12, when two restaurants are retrieved as destinations by the retrieval function 51, integrated icons C4, C5 respectively combining a restaurant icon, a parking lot icon, and an evaluation ranking are displayed on the map information displayed on the display 6 in the positions of the respective destination restaurants. Further, the allied parking lot icon is displayed as the parking lot icon of the integrated icon C4, while the coin-operated parking lot icon is displayed as the parking lot icon of the integrated icon C5. As a result, the user can easily determine whether or not an allied parking lot exists within the set distance of each restaurant by looking at the display screen of the display 6.

As shown in FIG. 13, when the integrated icon C4 displaying the allied parking lot icon is selected through the input device 3, the integrated icon C4 is deleted, whereupon the restaurant icon R4 is displayed in the position of the destination restaurant corresponding to the integrated icon C4 and the allied parking lot icon P10 is displayed in the position of the parking lot. Further, the restaurant icon R4 is displayed in an emphasized manner using the target mark T, and the connecting line L is displayed between the restaurant icon R4 and the allied parking lot icon P10. As a result, the alliance between the destination restaurant and the parking lot can be clarified, and the positions of the restaurant and the allied parking lot can be grasped easily.

With the map information display apparatus 1 according to this embodiment, as described above, during a normal operation, the integrated icon integrating the destination icon and the peripheral facility icon is displayed rather than displaying the destination icon and peripheral facility icons, and therefore a surface area of the map information and the destination icon that is hidden by the peripheral facility icons can be reduced while indicating that a peripheral facility exists within the set distance of the destination. As a result, the map information can be viewed more easily.

By displaying the integrated icon in the position of the destination at this time, the surface area of the map information on the periphery of the destination that is hidden by the peripheral facility icons can be reduced while specifying the position of the destination. As a result, the route to the destination can be determined appropriately.

When the integrated icon is selected, the selected integrated icon is deleted, and in its place, the destination icon and the peripheral facility icon are displayed respectively in the positions of the destination and the peripheral facility. As a result, a positional relationship between the destination and the peripheral facility can be grasped easily.

A preferred embodiment of the invention was described above, but the invention is not limited to the above embodiment. For example, in the above embodiment, the integrated icon is displayed in the position of the destination, the destination icon (the restaurant icon) is displayed in the position of the destination, and the peripheral facility icon (the parking lot icon) is displayed in the position of the peripheral facility. However, the display positions may be modified appropriately within a range where the positions of the respective facilities can be understood.

Further, in the above embodiment, a form of the peripheral facility icon displayed within the integrated icon is varied on the basis of the relationship between the destination and the peripheral facility. However, the form of the peripheral facility icon displayed within the integrated icon may remain identical regardless of the relationship between the destination and the peripheral facility.

Furthermore, in the above embodiment, the integrated icon is formed from and displayed as a combination of the destination icon, the peripheral facility icon, and the evaluation ranking, but as long as at least the destination icon and the peripheral facility icon are combined, other information may be combined and displayed therewith as appropriate.

Moreover, in the above embodiment, the connecting line linking the destination icon to the peripheral facility icon is displayed in order to indicate the relationship (an alliance, for example) between the destination and the peripheral facility. However, as long as it can be understood that the destination and the peripheral facility have a predetermined relationship, the relationship between the destination and the peripheral facility may be indicated using any type of display.

Furthermore, in the above embodiment, a destination retrieved by the navigation device is employed as the specific facility, but various facilities other than a destination may be employed. More simply, for example, various facilities displayed on a display constituted by a map scroll may be set as the specific facility.

## Claims

1. A map information display apparatus (1) for displaying map information, configured to display, when the map information to be displayed includes a specific facility, which has been searched as a destination, and a peripheral facility having a relationship to the specific facility and existing in the vicinity of the specific facility within a predetermined distance from the specific facility, a single integrated mark combining at least a specific facility mark indicating the specific facility and a peripheral facility mark indicating the peripheral facility on the map information, wherein the map information display apparatus (1) comprises:
an input device (3),
a retrieval function (51) configured to retrieve a destination and a peripheral facility existing within the predetermined distance from the destination, and a database including retrieval subject facilities such that when a facility retrieval condition is set from the input device (3), a facility matching the retrieval condition is extracted from the database as the destination, wherein a type of the peripheral facility is specified by associating peripheral facility types with possible retrieval subject facilities in advance in the database,
wherein the map information display apparatus (1) is configured to perform retrieval processing using the retrieval function (51),
wherein in the retrieval processing, a specific facility matching the retrieval condition set using the input device (3) is retrieved as the destination and a peripheral facility existing within the predetermined distance of the destination is retrieved as the peripheral facility
wherein the map information display apparatus (1) further comprises a display function (52) configured to display the integrated mark on the map information without displaying the specific facility mark and the peripheral facility mark,
**characterized in that** the display function (52) is configured to delete the integrated mark, and to display the specific facility mark on the position of the specific facility in the map information, and the peripheral facility mark on a position of the peripheral facility in the map information, when the integrated mark is selected through the input device (3).

2. The map information display apparatus (1) according to claim 1, **characterized in that** the display function (52) is configured to display the integrated mark on the position of the specific facility in the map information.

3. The map information display apparatus (1) according to claim 1 or 2, **characterized**
**in that** the integrated mark indicates the relationship between the specific facility and the peripheral facility.

4. The map information display apparatus according to any one of claims 1 to 3, **characterized in that** the peripheral facility mark is varied on the basis of the relationship between the specific facility and the peripheral facility.

5. The map information display apparatus (1) according to any one of claims 1 to 4, **characterized in that** the display function (52) is configured to display the specific facility mark on the map information on the position of the specific facility in an emphasized manner.

6. The map information display apparatus (1) according to any one of claims 1 to 5, **characterized in that**, when the peripheral facility exists in plurality, the map information display apparatus (1) is configured to set a priority order with regard to relationships between the specific facility and the respective peripheral facilities, and the display function (52) is configured to display, after the integrated mark is deleted, the peripheral facility mark indicating a peripheral facility for which the priority order is equal to or higher than a predetermined level separately from the peripheral facility mark indicating a peripheral facility for which the priority order is lower than the predetermined level.

7. The map information display apparatus (1) according to claim 6, **characterized in that** the display function (52) is configured to display, after the integrated mark is deleted, the peripheral facility mark indicating the peripheral facility for which the priority order is equal to or higher than the predetermined level separately from the peripheral facility mark indicating the peripheral facility for which the priority order is lower than the predetermined level by displaying a connecting line linking the peripheral facility mark indicating the peripheral facility for which the priority order is equal to or higher than the predetermined level to the specific facility mark indicating the specific facility.

## Patentansprüche

1. Karteninformations - Anzeigeeinrichtung (1) zur Anzeige von Karteninformationen,
die dazu ausgelegt ist,
wenn die Karteninformationen, die anzuzeigen sind, eine spezifische Einrichtung, die als ein Ziel gesucht worden ist, und eine periphere Einrichtung, die eine Beziehung zu der spezifischen Einrichtung aufweist und in der Nachbarschaft der spezifischen Einrichtung innerhalb eines vorbestimmten Abstands zu der spezifischen Einrichtung vorhanden ist, enthält, eine einzige integrierte Markierung, die mindestens eine spezifische Einrichtungsmarkierung, die die spezifische Einrichtung anzeigt, und eine periphere Einrichtungs - Markierung, die die periphere Einrichtung anzeigt, kombiniert, auf den Karteninformationen anzuzeigen,
wobei die Karteninformations - Anzeigeeinrichtung (1) aufweist:
eine Eingabeeinrichtung (3),
eine Wiedergewinnungsfunktion (51), die dazu konfiguriert ist, ein Ziel und eine periphere Einrichtung, die innerhalb des vorbestimmten Abstands zu dem Ziel existiert, wiederzugewinnen, und
eine Datenbank, die Wiedergewinnungs - Subjekt - Einrichtungen enthält, derart, dass, wenn eine Einrichtungs - Wiedergewinnungs - Bedingung von der Eingabeeinrichtung (3) gesetzt ist, eine Einrichtung, die die Wiedergewinnungs - Bedingung erfüllt, aus der Datenbank als das Ziel extrahiert wird,
wobei ein Typ der peripheren Einrichtung dadurch spezifiziert ist, dass Typen der peripheren Einrichtung mit möglichen Wiedergewinnungs - Subjekt - Einrichtungen vorab in der Datenbank assoziiert sind,
wobei die Karteninformations - Anzeigeeinrichtung (1) dazu konfiguriert ist, eine Wiedergewinnungs - Verarbeitung unter Verwendung der Wiedergewinnungsfunktion (51) auszuführen, wobei bei der Wiedergewinnungsverarbeitung eine spezifische Einrichtung - Anpassung der Wiedergewinnungsbedingung, die unter Verwendung der Eingabeeinrichtung (2) gesetzt ist, als das Ziel wiedergewonnen wird, und eine periphere Einrichtung, die innerhalb des vorbestimmten Abstands zu dem Ziel existiert, als die periphere Einrichtung wiedergewonnen wird,
wobei die Karteninformations - Anzeigeeinrichtung (1) weiterhin eine Anzeigefunktion (52) aufweist, die dazu konfiguriert ist, die integrierte Markierung auf den Karteninformationen anzuzeigen, ohne dass die spezifische - Einrichtungs - Markierung und die periphere - Einrichtungs - Markierung angezeigt werden,
**dadurch gekennzeichnet, dass** die Anzeigefunktion (52) dazu konfiguriert ist, die integrierte Marke zu löschen und die spezifische Anzeige - Markierung an der Position der spezifischen Einrichtung in den Karteninformationen anzuzeigen, und die periphere Anzeige - Markierung an einer Position der peripheren Einrichtung in den Karteninformationen anzuzeigen, wenn die integrierte Markierung durch die Eingabeeinrichtung (3) selektiert ist.

2. Karteninformations - Anzeigeeinrichtung (1) nach Anspruch 1, **dadurch gekennzeichnet, dass**
die Anzeigeinformation (52) dazu konfiguriert ist, die integrierte Markierung an der Position der spezifischen Einrichtung in den Karteninformationen anzuzeigen.

3. Karteninformations - Anzeigeeinrichtung (1) nach Anspruch 1 oder 2, **dadurch gekennzeichnet,**
**dass** die integrierte Markierung die Beziehung zwischen der spezifischen Einrichtung und der peripheren Einrichtung angibt.

4. Karteninformations - Anzeigeeinrichtung nach einem beliebigen der Ansprüche 1 bis 3, **dadurch gekennzeichnet, dass** die periphere Einrichtungs - Markierung auf der Basis der Beziehung zwischen der spezifischen Einrichtung und der peripheren Einrichtung variiert ist.

5. Karteninformations - Anzeigeeinrichtung (1) nach einem beliebigen der Ansprüche 1 bis 4,
**dadurch gekennzeichnet, dass** die Anzeigefunktion (52) dazu konfiguriert ist, die spezifische - Einrichtungs - Markierung auf den Karteninformationen an der Position der spezifischen Markierung in einer hervorgehobenen Weise anzuzeigen.

6. Karteninformations - Anzeigeeinrichtung (1) nach einem beliebigen der Ansprüche 1 bis 5,
**dadurch gekennzeichnet, dass**
wenn die periphere Einrichtung in Mehrzahl vorhanden ist, die Karteninformations - Anzeigeeinrichtung (1) dazu konfiguriert ist, eine Prioritäts - Rangfolge mit Bezug zu Beziehungen zwischen der spezifischen Einrichtung und den jeweiligen peripheren Einrichtungen festzulegen, und
die Anzeigefunktion (52) dazu konfiguriert ist, nach dem Löschen der integrierten Markierung die periphere - Einrichtungs - Markierung, die eine periphere Einrichtung angibt, für die die Prioritäts - Rangfolge gleich groß wie oder höher als ein vorbestimmter Pegel ist, separat von der peripheren - Einrichtung - Markierung anzuzeigen, die eine periphere Einrichtung angibt, für die die Prioritäts - Rangfolge niedriger ist als der vorbestimmte Pegel.

7. Karteninformations - Anzeigeeinrichtung (1) nach Anspruch 6, **dadurch gekennzeichnet, dass** die Anzeigefunktion (52) dazu konfiguriert ist,
nachdem die integrierte Markierung gelöscht ist, die periphere - Einrichtungs - Markierung, die die periphere Einrichtung angibt, für die die Prioritäts - Rangfolge gleich groß wie oder größer als der vorbestimmte Pegel ist, separat von der peripheren - Einrichtungs - Markierung, die die periphere Einrichtung angibt, für die die Prioritäts - Rangfolge niedriger ist als der vorbestimmte Pegel, anzuzeigen, indem eine verbindende Linie, die die periphere - Einrichtungs - Markierung, die die periphere Einrichtung angibt, für die die Prioritäts - Rangfolge gleich groß wie oder höher als der vorbestimmte Pegel ist, mit der spezifischen - Einrichtungs - Markierung verknüpft, die die spezifische Einrichtung angibt, angezeigt wird.

## Revendications

1. Appareil d'affichage d'informations cartographiques (1) pour afficher des informations cartographiques, configuré pour afficher, lorsque les informations cartographiques à afficher incluent une installation spécifique, qui a été recherchée comme une destination, et une installation périphérique ayant une relation avec l'installation spécifique et existant à proximité de l'installation spécifique à l'intérieur d'une distance prédéterminée par rapport à l'installation spécifique, une seule marque intégrée combinant au moins une marque d'installation spécifique indiquant l'installation spécifique et une marque d'installation périphérique indiquant l'installation périphérique sur les informations cartographiques,
où l'appareil d'affichage d'informations cartographiques (1) comprend :
un dispositif d'entrée (3),
une fonction de récupération (51) configurée pour récupérer une destination et une installation périphérique existant à l'intérieur de la distance prédéterminée par rapport à la destination, et
une base de données incluant des installations de sujet de récupération de sorte que lorsqu'une condition de récupération d'installation est établie à partir du dispositif d'entrée (3), une installation concordant avec la condition de récupération soit extraite de la base de données comme la destination,
où un type de l'installation périphérique est spécifié en associant des types d'installation périphérique à des installations de sujet de récupération possibles à l'avance dans la base de données,
où l'appareil d'affichage d'informations cartographiques (1) est configuré pour effectuer un traitement de récupération en utilisant la fonction de récupération (51), où dans le traitement de récupération, une installation spécifique concordant avec la condition de récupération établie en utilisant le dispositif d'entrée (3) est récupérée comme la destination et une installation périphérique existant à l'intérieur de la distance prédéterminée de la destination est récupérée comme l'installation périphérique,
où l'appareil d'affichage d'informations cartographiques (1) comprend en outre une fonction d'affichage (52) configurée pour afficher la marque intégrée sur les informations cartographiques sans afficher la marque d'installation spécifique et la marque d'installation périphérique,
**caractérisé en ce que** la fonction d'affichage (52) est configurée pour supprimer la marque intégrée, et pour afficher la marque d'installation spécifique sur la position de l'installation spécifique dans les informations cartographiques, et la marque d'installation périphérique sur une position de l'installation périphérique dans les informations cartographiques, lorsque la marque intégrée est sélectionnée par l'intermédiaire du dispositif d'entrée (3).

2. Appareil d'affichage d'informations cartographiques (1) selon la revendication 1, **caractérisé en ce que** la fonction d'affichage (52) est configurée pour afficher la marque intégrée sur la position de l'installation spécifique dans les informations cartographiques.

3. Appareil d'affichage d'informations cartographiques (1) selon la revendication 1 ou 2, **caractérisé en ce que** la marque intégrée indique la relation entre l'installation spécifique et l'installation périphérique.

4. Appareil d'affichage d'informations cartographiques selon l'une quelconque des revendications 1 à 3, **caractérisé en ce que** la marque d'installation périphérique est variée sur la base de la relation entre l'installation spécifique et l'installation périphérique.

5. Appareil d'affichage d'informations cartographiques (1) selon l'une quelconque des revendications 1 à 4, **caractérisé en ce que** la fonction d'affichage (52) est configurée pour afficher la marque d'installation spécifique sur les informations cartographiques sur la position de l'installation spécifique d'une manière mise en évidence.

6. Appareil d'affichage d'informations cartographiques (1) selon l'une quelconque des revendications 1 à 5, **caractérisé en ce que**, lorsque l'installation périphérique existe en pluralité, l'appareil d'affichage d'informations cartographiques (1) est configuré pour établir un ordre de priorité en ce qui concerne les relations entre l'installation spécifique et les installations périphériques respectives, et
la fonction d'affichage (52) est configurée pour afficher, après que la marque intégrée est supprimée, la marque d'installation périphérique indiquant une installation périphérique pour laquelle l'ordre de priorité est égal ou supérieur à un niveau prédéterminé séparément de la marque d'installation périphérique indiquant une installation périphérique pour laquelle l'ordre de priorité est inférieur au niveau prédéterminé.

7. Appareil d'affichage d'informations cartographiques (1) selon la revendication 6, **caractérisé en ce que** la fonction d'affichage (52) est configurée pour afficher, après que la marque intégrée est supprimée, la marque d'installation périphérique indiquant l'installation périphérique pour laquelle l'ordre de priorité est égal ou supérieur au niveau prédéterminé séparément de la marque d'installation périphérique indiquant l'installation périphérique pour laquelle l'ordre de priorité est inférieur au niveau prédéterminé en affichant une ligne de connexion reliant la marque d'installation périphérique indiquant l'installation périphérique pour laquelle l'ordre de priorité est égal ou supérieur au niveau prédéterminé à la marque d'installation spécifique indiquant l'installation spécifique.
